# EUROPEAN PATENT SPECIFICATION

(11) **EP 0 325 417 B1**
(45) Date of publication and mention of the grant of the patent: **25.10.1995**
(21) Application number: 89300428.3
(22) Date of filing: 18.01.1989
(51) Int. Cl.: G06T 11/60

(54) **Document image processing apparatus**
Dokumentenbildverarbeitungsgerät
Appareil de traitement d'images de documents

(30) Priority: 19.01.1988 JP 7518/88
(43) Date of publication of application: 26.07.1989
(73) Proprietor: KABUSHIKI KAISHA TOSHIBA, Kawasaki-shi, Kanagawa-ken 210 (JP)
(72) Inventor: Tsujimoto, Shuichi c/o Patent Division, Minato-ku Tokyo 105 (JP)
(74) Representative: BATCHELLOR, KIRK & CO.

(56) References cited:
- PROCEEDINGS OF THE 1987 IEEE INTERNATIONAL CONFERENCE ON SYSTEMS, MAN AND CYBERNETICS; vol. 2, 20 October 1987, NEW YORK, US pages 759 - 763; O. IWAKI ET AL.: 'A segmentation method based on office document hierarchical structure'
- 8TH INTERNATIONAL CONFERENCE ON PATTERN RECOGNITION, 27 October 1986, NEW YORK, US pages 769 - 772; Y. MAEDA ET AL.: 'Character segmentation in Japanese hand-written document images'
- 9TH INTERNATIONAL CONFERENCE ON PATTERN RECOGNITION 14 November 1988, NEW YORK, US, pages 739 - 743; G. CIARDIELLO ET AL.: "An experimental system for office document handling and text recognition"

## Description

This invention relates to a document image processing apparatus, and more particularly to such apparatus that can properly read a document image which includes a number of articles and columns.

Osamu IWAKI et al, "A segmentation method based on office document hierarchical structure", IEEE 1987 discloses a segmentation method which extracts characters and graphics from office documents by using the documents' properties, which are based on a hierarchical structure.

Y. MAEDA et al, "Character segmentation in Japanese hand-written document images", IEEE 1986 discloses an algorithm which is in two stages.

The first state is the textline segmentation. In this stage, the document image is firstly divided into minute oblong images (MOIs). Then, the body text and the heading are segmented at a high speed by both the features of MOIs and the knowledge based upon the document structure. When the segmented textline has an underline, the underline can be erased in this stage.

The second stage is the character segmentation. In this stage, characters are segmented by the information of the pattern and the location in the textline extracted from the document image in the first stage.

However, conventional document image processing apparatus cannot automatically read a document which includes a large number of articles and columns. Such apparatus can only read from the top to the bottom of a document having a single article in a single column.

Therefore, when a document including a large number of articles and columns is required to be read by the conventional apparatus, the input document image must be divided into sub-blocks represented by lines of text or paragraphs. Further, the relationship of the connections between the respective sub-blocks must be designated by a human operator.

Moreover, each document to be read must be defined individually in terms of its own layout form. Thus, a document including a large number of articles and columns must be read by procedures associated with cumbersome and time-consuming human intervention.

An object of the present invention is to provide a document image processing apparatus capable of automatically processing input document images without the need for additional human intervention.

In accordance with one aspect of this invention, there is provided a document image processing apparatus comprising structure analysing means for analytically dividing the image of a document into sub-blocks having analogous physical properties such as character size and pitch, spacing, font type and underlining and for segregating the sub-blocks into items (H,B) in accordance with their physical properties; geometric structure forming means for forming a geometric structure representing a tree diagram including nodes and lists corresponding to the physical positional relationship between said sub-blocks; and structure understanding means including (i) means for transforming said geometric structure into a logical structure by applying to the nodes and lists of said geometrical structure various rules of extracting priority order information, (ii) multiple texts processing means and (iii) item adding means for outputting a modified document image having a predetermined relationship between said sub-blocks indicating the priority order of proper human reading.

In accordance with another aspect of the invention there is provided a document image processing apparatus, comprising means for analytically dividing the image of a document into sub-blocks having analogous physical properties; means for providing said each sub-blocks with a position indicating code, each code having a prescribed priority and a discriminating code corresponding to a predetermined category of said sub-blocks; tree means for grouping any of the position indicating codes of said sub-blocks having the same prescribed priority, the tree means including means for separating the groups of codes into first node groups wherein multiple groups of indicating codes have the next priority in the prescribed priority order, and second node groups wherein only a single group of indicating codes has the next priority in the prescribed priority order; and means for representing the position indicating codes of said sub-blocks on the same level and the separate nodes on the same level of the tree, said position codes of the sub-blocks represented at the nodes of the tree, and representing the position indicating codes of the sub-blocks being controlled by said sub-blocks at the nodes in the lower portion of the tree.

In order that the invention may be more readily understood, it will now be described, by way of example only, with reference to the accompanying drawings, in which:-
Figure 1 is a block diagram illustrating one embodiment according to the present invention;
Figures 2a and 2b are diagrams illustrating the operations of one embodiment according to the present invention: Figure 2a is a diagram illustrating the operation of a structure analyzing unit and Figure 2b is a diagram illustrating the operation of a geometric structure forming unit;
Figure 3 is a detail block diagram illustrating one embodiment according to the present invention;
Figures 4a and 4b are diagrams illustrating the operation of one embodiment according to the present invention: Figure 4a is a diagram illustrating the operation of the structure analyzing unit urilizing different designations for the sub-blocks and Figure 4b is a diagram illustrating the operation of a structure understanding unit;
Figures 5 to 8 are diagrams respectively illustrating the operation of the structure understanding unit for different document image arrangements and different representation forms;
Figure 9 is a diagram illustrating the operation results of one embodiment according to the present invention; and
Figures 10a and 10b are diagrams illustrating the operations of one embodiment according to the present invention: Figure 10a is a diagram illustrating the operations of the structure analyzing unit and Figure 10b is a diagram illustrating the operations of the geometric structure forming unit and the structure understanding unit.

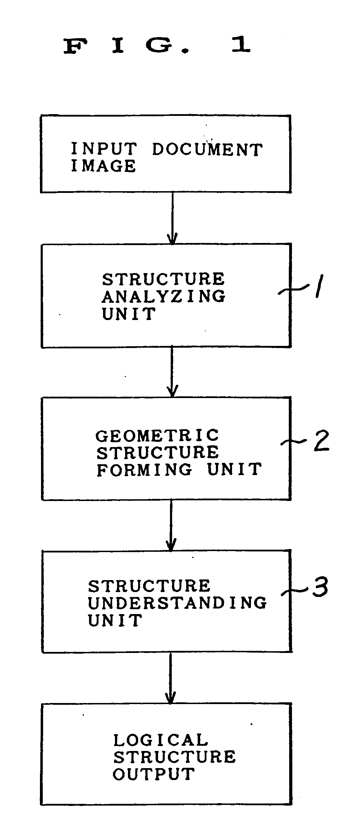

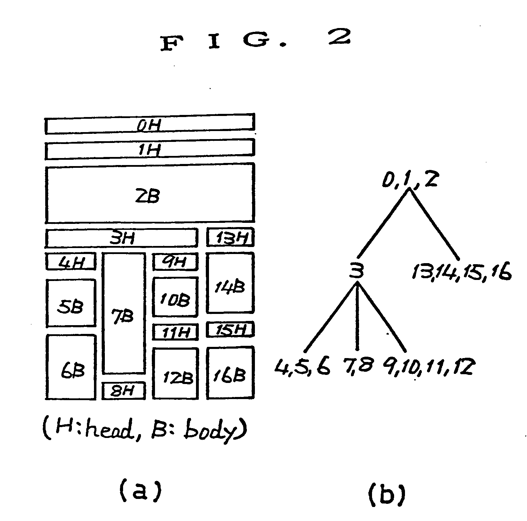

In Figure 1, input document images are fed into a structure analyzing unit 1. In the structure analyzing unit 1, the input document images are analytically divided into sub-blocks having analogous physical properties (such as character size and pitch, spacing, font type, and underlining). Here, the sub-blocks are classified into two items such as "head" and "body" in accordance with their physical properties. The term "head" (H) is given to a sub-block that extends over plural columns, or includes characters processed by centering. The term "body" (B) is given to a sub-block other than a "head" (H) sub-block, as shown in Figure 2a. Further, the numerals attached to H or B of the sub-blocks in Figure 2a indicate the proper reading order.

Next, the positional relationship between the sub-blocks is represented by use of a tree diagram (hereinafter, simply referred to as a tree) in a geometric structure forming unit 2. The thus formed positional relationship is defined as a geometric structure. (Figure 2b).

As seen from Figure 2b, the respective nodes of the tree have single or plural numerals in sequence. This group of numerals is defined as a list. The numerals of the lists represent the positional relationship of the sub-blocks in Figure 2a. The order of the numerals coincides with the proper human reading order.

Specifically, the uppermost node of the tree of Figure 2b has a list including numerals such as 0, 1 and 2. These correspond to the sub-blocks OH, 1H and 2B respectivly positioned in the same column at the upper portion of Figure 2a. Further, in Figure 2a, the sub-blocks 3H and 13H are positioned under the sub-block 2B. Three columns are present under the sub-block 3H. Each column includes sub-blocks such as 4H, 5B and 6B, and 7B and 8H, and 9H, 10B, 11H and 12B.

Next only one column including sub-blocks 14B, 15H and 16B is positioned under the sub-block 13H. Therefore, in Figure 2b, the left node at the intermediate portion of the tree has a list including the numeral 3, which represents 3 of the sub-block 3H in Figure 2a. The right node has a list including the numerals 13, 14, 15 and 16 which respectively represent sub-blocks 13H, 14B, 15H and 16B in Figure 2a. Similarly, three nodes which are situated under the node having the list that includes 3, have the lists including numerals 4, 5 and 6, 7 and 8, and 9, 10, 11 and 12 which respectively represent sub-blocks 4H, 5B and 6B, of the sub-blocks 7B and 8H, sub-blocks 9H, 10B, 11H and 12B in Figure 2a.

Next, in the structure understanding unit 3 of Figure 1, a logical structure is produced on the basis of the above-described geometric structure. The logical structure corresponds to a modified document image having a predetermined relationship between the sub-blocks.

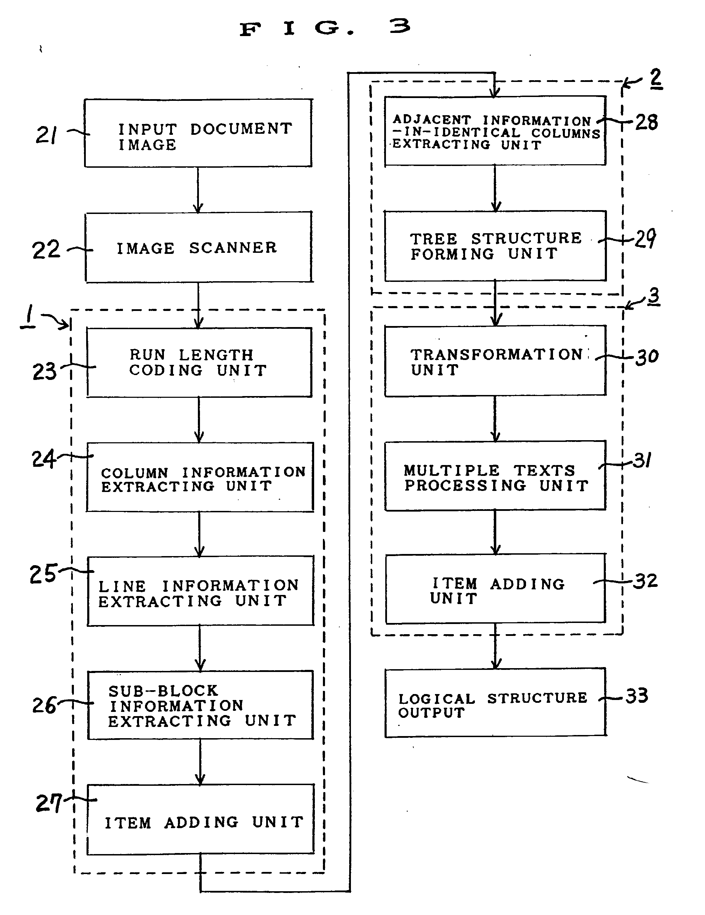

Next, the embodiment of Figure 1 will be described in more detail with reference to Figure 3. The structure analyzing unit 1 of Figure 1 comprises a run length coding unit 23, a column information extracting unit 24, a line information extracting unit 25, a sub-block information extracting unit 26, and an item adding unit 27. Further, the geometric structure forming unit 2 of Figure 1 comprises an adjacent information-in-identical column extracting unit 28, and a tree structure forming unit 29. The structure understanding unit 3 of Figure 1 comprises a transformation unit 30, a multiple texts processing unit 31, and an item-adding unit 32.

In Figure 3, input document images 21 are optically read by an imge scanner 22. Output signals produced from the image scanner 22 are fed into the run length coding unit 23. In the unit 23, run length code signals are formed on the basis of the thus input document image signals. Next, the run length code signals are processed in prescribed manners by means of the column information extracting unit 24, the line information extracting unit 25, and the sub-block information extracting unit 26. As a result, the input document images are divided into sub-block information corresponding to the respective sub-blocks of the input document images in terms of physical properties. The thus obtained sub-block information is designated corresponding to items of the input document images by means of the item adding unit 27.

Thereafter, output signals produced from the item adding unit 27 are fed into the adjacent information-in-identical column extracting unit 28. In the unit 28, sub-blocks adjacent to each other in the same column are extracted as adjacent information. The adjacent information produced from the unit 28 is fed into the tree structure forming unit 29. In the unit 29, trees of geometric structure having nodes including the thus received adjacent information are formed.

Subsequently, output signals produced from the unit 29 are fed into the transformation unit 30. In the unit 30, the trees of geometric structure are transformed into trees of logical structure by use of various rules of extracting priority order information. Thereafter, output signals produced from the unit 30 are fed into the multiple texts processing unit 31. In the unit 31, a large number of texts are processed in accordance with the prescribed manner. Finaly, output signals produced from the unit 31 are fed into the item-adding unit 32. In the unit 32, corresponding items are respectively added to the thus obtained sub-blocks. As a result, logical structure outputs 33 are produced from the unit 2.

Here, the description will be made as to the logical structure. In accordance with the contents of a document, the sub-blocks can be classified into bibliographic items such as title, subtitle, abstract, etc, and main text items, such as paragraphs. The priority relationship of the sub-blocks is represented logically by use of a tree. The respective nodes of the tree have lists including the numerals of sub-blocks having the same priority. The order of the numerals in the respective lists coincides with the priority order of proper reading. Further, the size of the tree corresponds to the number of different priority relationships present among the sub-blocks of the document image.

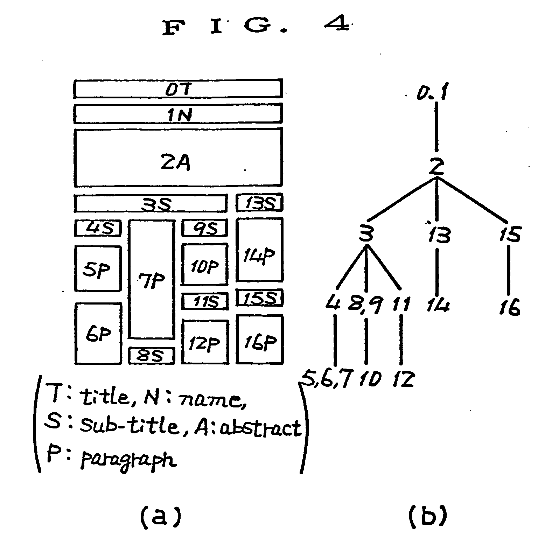

Specifically, Figure 4a shows a geometric structure. In Figure 4a, T represents a title, N represents an author's name, S represents a subtitle, A represents an abstract, and P represents a text paragraph. Further, the numerals of the respective sub-blocks indicate the logical order of the document from top to bottom, i.e., in proper human reading order. The geometric structure of Figure 4a is transformed into a logical structure in the form of a tree, as shown in Figure 4b. The uppermost node of the tree of Figure 4b has a list including the numerals 0 and 1. These represent the title and author's name which are on the same level in terms of priority. The order of the numerals 0 and 1 correspond to the proper reading order. The node situated immediately under the uppermost node has a list including the numeral 2. This represents the sub-block 2A which is an abstract. The next three nodes have lists each including one of the numerals 3, 13 and 15. These correspond to the sub-blocks 3S, 13S and 15S which are the subtitles on the same level. The three nodes under the number 3 each has a list including the numerals 4, 8 and 9, and 11 respectively. These correspond to the sub-blocks 4S, 8S, 9S and 11S, each of which is a subtitle and is dominated by the subtitle 3S. There is no paragraph between the subtitles 8S and 9S. Thus, the corresponding numerals 8 and 9 appear at the same node. The paragraphs 5, 6 and 7 are dominated by the subtitle 4S.

Thus, in the tree of Figure 4b, the numerals 5, 6 and 7 are situated togeter under the number 4. Similarly, the paragraph 10 is dominated by the subtitle 9S. Thus, the numeral 10 is situated under the node having the list including the numerals 8 and 9. The paragraph 12 is dominated by the subtitle 11, so that the numeral 12 is situated under the node having the list including the numeral 11. The paragraph 16p is dominated by the subtitle 15S, so that the numeral 16 is situated under the node having the list including the numeral 15.

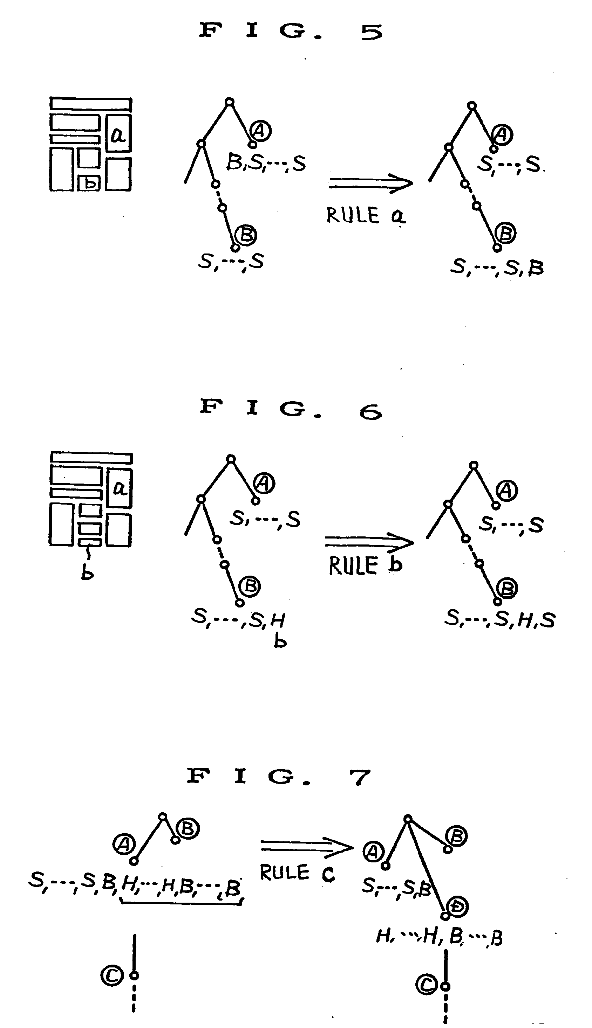

Next, the transformation examples in the structure understanding unit 3 will be described with reference to Figure 5 through Figure 8. A logical structure can be obtained by transforming a geometric structure in accordance with the following four rules a through d. In Figure 5 through Figure 8, S represents a sub-block, H represents a head sub-block, and B represents a body sub-block.

### Rule a (refer to Figure 5)

A geometric structure is represented by the left hand tree. The tree is obtained corresponding to sub-blocks a and b. The Tree of the geometric structure is transformed into a logical structure represented by the right hand tree. The transformation is performed as follows.

The terminal node (A) of the left hand tree has a list including B,S...S corresponding to the content of the sub-block a. The terminal node (B) of the left hand tree has a list including S...S corresponding to the content of the sub-block b.

Here, B, which is present at the head of the row in the list of the terminal node (A) of the tree, is moved to the end of the row in the list of the terminal node (B) of the right hand tree.

This is the rule a to be applied when a terminal node (A) has the list beginning with B, and when the node previous to the terminal node (A) is a terminal node (B)

### Rule b (refer to Figure 6)

A geometric structure is represented by the left hand tree. The tree is obtained corresponding to sub-blocks a and b. The tree of the geometric structure is transformed into a logical structure represented by the right hand tree. The transformation is performed as follows.

The terminal node (A) of the left hand tree has a list including S...S corresponding to the content of the sub-block. The terminal node (B) of the left hand tree has a list including S...S, H corresponding to the content of the sub-block b.

Here, S, which is present at the head of the row in the list of the terminal node (A) of the left hand tree, is moved to the portion immediately after H in the list of the terminal node (B) of the right hand tree.

This is the rule b to be applied when the list of the terminal node (B) of the tree ends with H, and when the next node subsequent to the terminal node (B) is a terminal node (A).

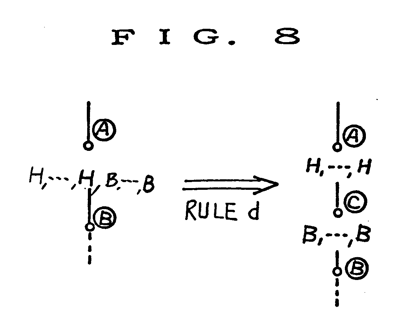

### Rule c (refer to Figure 7)

A geometric structure represented by the left hand tree is transformed into a logical structure represented by the right hand tree.

A node (A) of the tree has a list including S...S, B and an H-B sequence (a combination of sequential Hs and Bs). In this case, a node (D) is newly produced so as to have a list that only includes the H-B sequence extracted from the list of the node (A) of the tree. The thus produced node (D) is added to a parent node of the tree as a brother node. If the node (A) has a descendant node group (C), the node group (C) is moved together with the node (D). Further, if a parent node does not exist, a NULL parent node is produced, and the above-described process is performed.

This is the rule c which is a preparatory process that causes one node to represent one particular relationship.

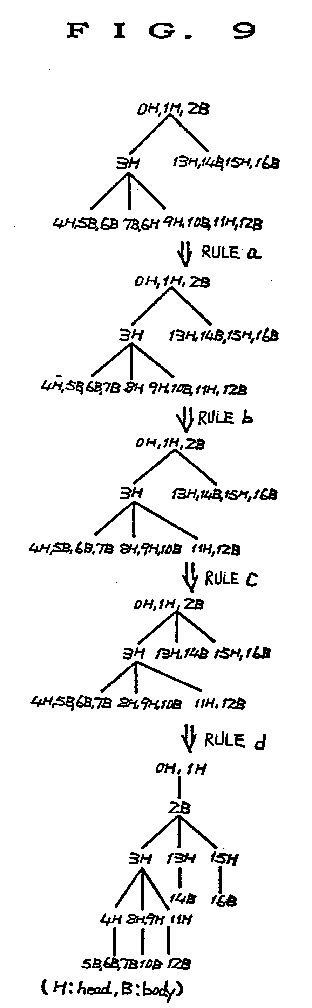

### Rule d (refer to Figure 8)

A geometric structure represented by the left hand tree is transformed into a logical structure represented by the right hand tree.

A node (A) of the tree has a list including an H-B sequence. In this case, a node (C) is newly produced so as to have a list that only includes the sequential Bs extracted from the list of the node (A) of the tree. The thus produced node (C) is added under node (A) of the tree as a child node.

This is the rule d which causes one node to represent another specified relationship.

Figure 9 shows an example of the transformation from the geometric structure of Figure 2b into the logical structure of Figure 4b by use of a combination of the above-described four rules a through d.

In the description of the four rules a through d, S, the sub-block, can include a larger amount of information. Further, H, the head sub-block, which is a root node, can represent a title or an author's name. The head sub-blocks within the nodes other than the root node can represent a subtitle. Moreover, B, the body sub-block within a terminal node can represent a paragraph. The body sub-blocks within the nodes other than the terminal node can represent an abstract or the like.

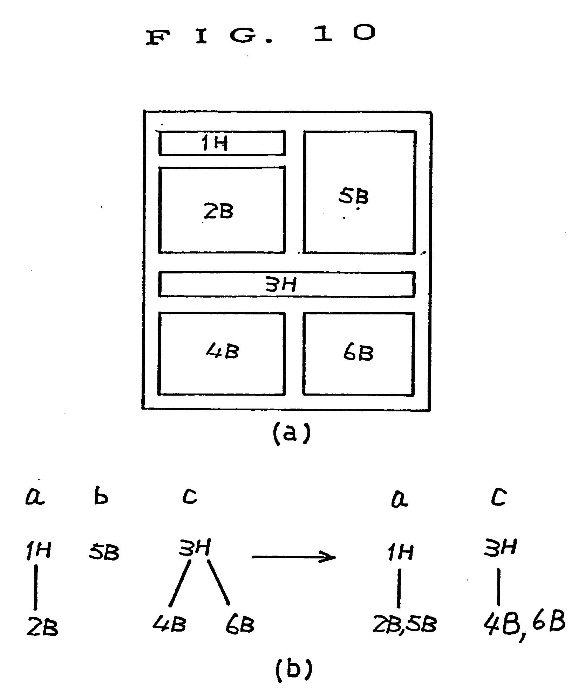

The above-described processes are performed with respect to a single geometric structure. However, a document including a large number of texts can also be represented by increasing the number of trees. In this case, the reading order of these trees is determined on the basis of the principle that the reading is not moved back to top of the preceeding left column. For example, as shown in Figures 10a and 10b, plural trees are used to represent a document including plural texts. Figure 10a shows a document including plural sub-blocks. Figure 10b shows geometric structures represented by three trees a , b and c.

The geometric structures are transformed into the logical structures as follows. Specifically, the tree a is produced corresponding to the sub-blocks 1H and 2B. The tree b is produced corresponding to the sub-block 5B, and the tree c is produced corresponding to the sub-blocks 3H, 4B and 6B. The tree a, tree b and tree c are arranged in alphabetical order. Here, the tree a having a root node which is a "head" can independently represent one text region. However, the tree b without the root node of a "head" (only a "body" is present) and it cannot independently represent one text region. Thus the tree b is added to the tree a, which is the next tree previous to the tree b. As a result, the tree a represents one text region, and the tree c represents another text region as shown in Figure 10b.

As described above, the logical structures are produced by processes performed in the structure understanding unit 3. As a result, plural trees with respect to the sub-blocks are determined corresponding to the respective text regions. In this case, the respective sub-blocks have been previously designated by such items as a title, a subtitle, a paragraph and the like. Thus, all the sub-blocks of the respective text regions are not required to be extracted, but only the titles or the titles with subtitles are required.

Next, techniques of displaying the results extracted from the respective texts will be described. Frames that surround the sub-blocks of the same text region are displayed with the same color, but different colors from those of other text regions. Moreover, the entire area of the sub-blocks of the same text region may also be displayed with the same color. As a result, the relationship between the respective sub-blocks can be clearly represented. In another display technique, several sub-blocks such as subtitle sub-blocks and their paragraph sub-blocks are compiled, and represented by use of the same color. Moreover, the sub-blocks may also be distinguished from each other by differences in brightness, by distinctions between solid- and dotted-lines, or by blinking or flashing characters on background. In addition, all of the sub-blocks of the respective texts may be surrounded with frames.

The corresponding text numbers may be added to the left shoulders of the respective frames. If the image sub-blocks, such as graphs and photographs, can be distinguished from the sentence sub-blocks by the processes performed in the structure analyzing unit 1, these sub-blocks may also be discriminated in the above-described manner. In this case, image sub-blocks may also be displayed using images in original form. In the above description, the respective sub-blocks are displayed in the complete form. However, the respective sub-blocks may also be represented by the use of constituent components, such as characters per se, frames that surround the characters, or the center lines representing the character rows. Moreover, the respective sub-blocks may also be represented by use of the base lines, the character patterns per se or the frames that surround the character patterns. In this case, the above-described multi-color discrimination technique may also be practiced.

Next, techniques of designating the extracted texts will be described. Here, texts to which the respective sub-blocks belong have already been clarified. Further, the logical relationship between the respective sub-blocks has already been recognized. Thus, a sub-block, which includes or exists nearest to a position designated by a mouse or the like, may also be extracted. In addition, a sub-block having a logical dominating relationship with such a position designated by a mouse or the like, may also be extracted. Moreover, a text including such a position designated by a mouse or the like may also be extracted. Therefore, the character recognition of the texts may be achieved on the basis of the thus extracted results. Further, the image by itself or the image in the form of binary values or the image formed by use of a dither technique may also be output. The above-described designation may be easily performed because the respective texts are clearly distinguished from each other by different colors.

As described above, according to the present invention, the meaning and connection relationship between the sub-blocks can be determined by use of physical properties (features) of the document alone without investigating the context of the sub-blocks.

Moreover, in accordance with the present invention, there can be provided a document image processing apparatus capable of automatically extracting specified text regions from a document including a large number of text regions without the need for additional human intervention. Further, the apparatus can also extract only the title from the respective text regions.

Obviously, numerous additional modifications and variations of the present invention are possible in light of the above teachings. It is therefore to be understood that within the scope of the appended claims, the invention may be practiced otherwise than as specifically described herein.

## Claims

1. A document image processing apparatus comprising structure analysing means (1) for analytically dividing the image of a document into sub-blocks having analogous physical properties such as character size and pitch, spacing, font type and underlining and for segregating the sub-blocks into items (H,B) in accordance with their physical properties; geometric structure forming means (2) for forming a geometric structure representing a tree diagram including nodes and lists corresponding to the physical positional relationship between said sub-blocks; and structure understanding means (3) including (i) means for transforming said geometric structure into a logical structure by applying to the nodes and lists of said geometrical structure various rules of extracting priority order information, (ii) multiple texts processing means and (iii) item adding means for outputting a modified document image having a predetermined relationship between said sub-blocks indicating the priority order of proper human reading.

2. The apparatus of claim 1, characterised in that said structure forming means includes means (29) for representing the physical positional relationship between said sub-blocks in tree-like form.

3. The apparatus of claim 1 or 2, characterised in that said structure understanding means includes means (30) for re-arranging the representation form into a logical tree corresponding to the predetermined relationship.

4. The apparatus of claim 1, characterised in that said structure analyzing means includes run length coding means, column information extracting means, line information extracting means, sub-block information extracting means and item adding means.

5. The apparatus of claim 2, characterised in that said geometric structure forming means includes means for extracting information adjacent to each other in the same column and tree structure forming means.

6. A document image processing apparatus, comprising means for analytically dividing the image of a document into sub-blocks having analogous physical properties; means for providing said each sub-block with a position indicating code, each code having a prescribed priority and a discriminating code corresponding to a predetermined category of said sub-blocks; tree means for grouping any of the position indicating codes of said sub-blocks having the same prescribed priority, the tree means including means for separating the groups of codes into first node groups wherein multiple groups of indicating codes have the next priority in the prescribed priority order, and second node groups wherein only a single group of indicating codes has the next priority in the prescribed priority order; and means for representing the position indicating codes of said sub-blocks on the same level at the separate nodes on the same level of the tree, said position indicating codes being selected from the position indicating codes of the sub-blocks represented at the nodes of the tree, and representing the position indicating codes of the sub-blocks being controlled by said sub-blocks at the nodes in the lower portion of the tree.

7. The apparatus of claim 6, characterised in that said means for dividing the image of a document into sub-blocks includes run length coding means, column information extracting means, line information extracting means and item adding means.

8. The apparatus of claim 6 or 7, characterised in that said means for grouping the position indicating codes of said sub-blocks includes means for extracting information adjacent to each other in the same column and tree structure forming means.

9. The apparatus of claim 8, 9 or 10, characterised in that said means for representing the position indicating codes of said sub-blocks includes means for transforming geometric structures into logical structures by use of rules of extracting priority order information, multiple texts processing means and item adding means.

## Patentansprüche

1. Dokumentenbildverarbeitungsgerät, mit einer die Struktur analysierenden Einrichtung (1) zum analytischen Auftrennen des Bildes eines Dokumentes in Unterbereiche, welche analoge körperliche Eigenschaften haben, wie beispielsweise Zeichengröße und -neigung, Zeichenabstand, Schriftart und Unterstreichungen, und zum Aufteilen der Unterbereiche in Gruppen (H, B) gemäß ihrer körperlichen Eigenschaften; einer Gestaltungseinrichtung (2) für geometrische Strukturen, um eine geometrische Struktur zu bilden, welche entsprechend der körperlichen Positionsbeziehung zwischen den Unterbereichen ein Baumdiagramm mit Knoten und Listen darstellt; und einer Einrichtung (3) zum Erfassen der Struktur, mit (i) einer Einrichtung, um die geometrische Struktur in eine logische Struktur zu transformieren, indem auf die Knoten und Listen der geometrischen Struktur verschiedene Regeln zur Gewinnung von Informationen bezüglich der Prioritätsreihenfolge angewendet werden, (ii) mit einer Verarbeitungseinrichtung für mehrere Texte und (iii) mit einer Gruppenverknüpfungseinrichtung, um ein verändertes Dokumentenbild mit einer vorbestimmten Beziehung zwischen den Unterbereichen auszugeben, die die Prioritätsreihenfolge guter Lesbarkeit für den Menschen angibt.

2. Gerät nach Anspruch 1, **dadurch gekennzeichnet**, daß die Struktur-Gestaltungseinrichtung eine Einrichtung (29) enthält, um die körperliche Positionsbeziehung zwischen den Unterbereichen in Form eines Baumes darzustellen.

3. Gerät nach Anspruch 1 oder 2, **dadurch gekennzeichnet**, daß die Einrichtung zum Erfassen der Struktur eine Einrichtung (30) enthält, um die Darstellungsform entsprechend der vorbestimmten Beziehung zu einem logischen Baum neu anzuordnen.

4. Gerät nach Anspruch 1, **dadurch gekennzeichnet**, daß die die Struktur analysierende Einrichtung eine Zeilenlänge-Kodiereinrichtung, eine Spalteninformations-Trenneinrichtung, eine Zeileninformations-Trenneinrichtung, eine Unterbereichsinformations-Trenneinrichtung und eine Gruppenverknüpfungseinrichtung enthält.

5. Gerät nach Anspruch 2, **dadurch gekennzeichnet,** daß die Gestaltungseinrichtung für geometrische Strukturen eine Einrichtung zum Trennen von Informationen, die in der gleichen Spalte benachbart nebeneinanderliegen, und eine Gestaltungseinrichtung für die Baumstruktur enthält.

6. Dokumentenbildverarbeitungsgerät, mit Einrichtungen zum analytischen Auftrennen des Bildes eines Dokumentes in Unterbereiche, welche analoge körperliche Eigenschaften haben; mit Einrichtungen, um jeden Unterbereich mit einem Code zur Kennzeichnung der Position, wobei jeder Code eine vorgeschriebene Priorität hat, und entsprechend einer vorbestimmten Kategorie der Unterbereiche mit einem Unterscheidungs-Code zu versehen; mit Baum-Einrichtungen zum Gruppieren der Codes zur Kennzeichnung der Position der Unterbereiche, die die gleiche vorgeschriebene Priorität haben, wobei die Baum-Einrichtungen Einrichtungen enthalten, um die Codegruppen in erste Knotengruppen, in denen mehrere Gruppen kennzeichnender Codes in der vorgeschriebenen Prioritätsreihenfolge die nachfolgende Priorität haben, und in zweite Knotengruppen aufzuteilen, in denen lediglich eine einzelne Gruppe kennzeichnender Codes in der vorgeschriebenen Prioritätsreihenfolge die nachfolgende Priorität hat; und mit Einrichtungen zum Darstellen der Codes zur Kennzeichnung der Position der Unterbereiche, die an verschiedenen Knoten der gleichen Ebene auf gleicher Ebene des Baumes liegen, wobei die Codes zur Kennzeichnung der Position aus den Codes zur Kennzeichnung der Position der Unterbereiche ausgewählt sind, die an den Knoten des Baumes dargestellt sind, und wobei die Darstellung der Codes zur Kennzeichnung der Position der Unterbereiche durch die Unterbereiche an den Knoten im unteren Bereich des Baumes gesteuert wird.

7. Gerät nach Anspruch 6, **dadurch gekennzeichnet,** daß die Einrichtung zum Auftrennen des Bildes eines Dokumentes in Unterbereiche eine Zeilenlänge-Kodiereinrichtung, eine Spalteninformations-Trenneinrichtung, eine Zeileninformations-Trenneinrichtung und eine Gruppenverknüpfungseinrichtung enthält.

8. Gerät nach Anspruch 6 oder 7, **dadurch gekennzeichnet**, daß die Einrichtung zum Gruppieren der Codes zur Kennzeichnung der Position der Unterbereiche eine Einrichtung zum Trennen von Informationen, die in der gleichen Spalte benachbart nebeneinanderliegen, und eine Gestaltungseinrichtung für die Baumstruktur enthält.

9. Gerät nach Anspruch 8, 9 oder 10, **dadurch gekennzeichnet**, daß die Einrichtung zum Darstellen der Codes zur Kennzeichnung der Position der Unterbereiche eine Einrichtung, um die geometrischen Strukturen unter Anwendung von Regeln zum Auftrennen von Prioritätsreihenfolgeinformationen in logische Strukturen zu transformieren, eine Verarbeitungseinrichtung für mehrere Texte und eine Gruppenverknüpfungseinrichtung enthält.

## Revendications

1. Appareil de traitement d'images de documents comprenant un moyen d'analyse de structure (1) pour effectuer la division analytique du document en sous-blocs de propriétés physiques analogues comme la taille des caractères et leur pas, les espaces, les types de polices de caractères et le soulignage et pour séparer les sous-blocs en éléments (H, B) en fonction de leurs propriétés physiques; un moyen de formation de structure géométrique (2) pour former une structure géométrique représentant un graphique arborescent comprenant des noeuds et des listes correspondant à la relation physique de position entre ces sous-blocs; et un moyen d'interprétation des structures (3) comprenant (i) un moyen pour transformer cette structure géométrique en structure logique en appliquant aux noeuds et aux listes de cette structure géométrique diverses règles d'extraction des informations sur l'ordre prioritaire, (ii) un moyen de traitement de textes multiples et (iii) un moyen additionneur d'éléments qui permet de sortir une image de document modifiée ayant une relation prédéterminée entre ces sous-blocs indiquant l'ordre de priorité de la lecture logique humaine.

2. Appareil selon la revendication 1, caractérisé par le fait que le moyen de formation de structure comporte un moyen (29) pour représenter la relation physique de position entre ces sous-blocs et la forme en structure arborescente.

3. Appareil selon la revendication 1 et la revendication 2, caractérisé par le fait que l'unité d'interprétation de structure comporte un moyen (30) permettant de réarranger la forme de représentation en une structure arborescente logique correspondant à la relation prédéterminée.

4. Appareil selon la revendication 1, caractérisée par le fait que ce moyen d'analyse de structure comporte un moyen de codage RLL, un moyen d'extraction d'informations de colonne, un moyen d'extraction d'informations de ligne, un moyen d'extraction d'informations de sous-blocs et un moyen additionneur d'éléments.

5. Appareil selon la revendication 2, caractérisé par le fait que le moyen de formation de structure géométrique comporte un moyen pour extraire des informations adjacentes dans une même colonne et un moyen de formation de structure arborescente.

6. Appareil de traitement d'images de documents, comprenant un moyen de division analytique pour diviser analytiquement l'image d'un document en sous-blocs ayant des propriétés physiques analogues; un moyen de doter chacun de ces blocs d'un code indicateur de position, chacun de ces codes indicateurs de position ayant une priorité prescrite et un code de distinction correspondant à une catégorie prédéterminée de ces sous-blocs; un moyen arborescent pour grouper chacun des codes indicateurs de position de ces sous-blocs ayant la même priorité prescrite, le moyen arborescent comprenant un moyen pour séparer les groupes de codes en groupes de premier noeud dans lesquels des groupes multiples de codes indicateurs ont la priorité suivante dans l'ordre prescrit des priorités, et des groupes de second noeud dans lequel un seul groupe de codes indicateurs a l'ordre de priorité suivant dans l'ordre prescrit des priorités; et un moyen pour représenter les codes indicateurs de position de ces sous-blocs au même niveau sur des noeuds séparés situés au même niveau de la structure arborescente, ces codes indicateurs de position des sous-blocs représentés dans les noeuds de la structure arborescente et représentant les codes indicateurs de position des sous-blocs étant contrôlés par ces sous-blocs des noeuds situés à la partie inférieure de la structure arborescente.

7. Appareil selon la revendication 6, caractérisé pare le fait que le moyen de division de l'image d'un document en sous-blocs comporte un moyen de codage RRL, un moyen d'extraction d'informations de colonne, un moyen d'extraction d'informations de ligne et un moyen additionneur d'éléments.

8. Appareil selon la revendication 6 ou la revendication 7, caractérisé par le fait que ce moyen de groupement des codes indicateurs de position de ces sous-blocs comporte un moyen d'extraction des informations adjacentes les unes aux autres dans la même colonne et un moyen de formation de structure arborescente;

9. Appareil selon la revendication 8, la revendication 9 ou la revendication 10, caractérisé par le fait que le moyen de représentation des codes indicateurs de position des sous-blocs comporte un moyen pour transformer les structures géométriques en structures logiques en utilisant des règles d'extraction d'informations d'ordre prioritaire, un moyen de traitement de textes multiples et un moyen additionneur d'éléments.
